# EUROPEAN PATENT APPLICATION

(11) **EP 1 559 330 A1**
(43) Date of publication of application: **03.08.2005**
(21) Application number: 02807896.2
(22) Date of filing: 30.09.2002
(51) Int. Cl.: A23L 1/10, B65D 65/10, B65D 65/46, B65D 85/50

(54) **SUSHI MANUFACTURING AND DISTRIBUTING SYSTEM**

(71) Applicant: Uchida, Yuichiro, Yonago-shi, Tottori 683-0802 (JP)
(72) Inventor: Uchida, Yuichiro, Yonago-shi, Tottori 683-0802 (JP)
(74) Representative: Gillard, Richard Edward
(86) International application number: PCT/JP2002/010194
(87) International publication number: WO 2004/030471

(57) **Abstract**

There is provided a technique for producing sushi, in which the sushi body and the exterior kelp can be eaten together in the harmonized synergistic flavor and mastication feeling, the integral tight mastication feeling can be given by the trinity of kelp, sushi material and vinegared rice, and in addition, the delivery can be realized at ordinary temperature for a long period of time.

There is disclosed a process for producing sushi, comprising
rolling a sushi body that a seasoning treated sushi material and vinegared rice have been combined together in a cooked edible kelp to form an edible kelp rolled sushi,
covering the whole surface of said edible kelp rolled sushi in adhesion with a shape-keeping film,
freezing said edible kelp rolled sushi covered with the shape-keeping film, in addition,
seal-packaging said shape-keeping film covered and frozen sushi, which has been rolled in kelp, and then, if necessary,
freeze storing said seal-packaged edible kelp rolled sushi.

The present invention further relates to a process for producing the above-described sushi, wherein the frozen edible kelp rolled sushi is thawed.

The present invention further relates to the sushi produced by the above-described process, and in addition a circulation process or system of sushi at ordinary temperature, in which the sushi is circulated at ordinary temperature.

## Description

### Technical Field

The present invention relates to the production of sushi and the circulation system thereof. More particularly, the present invention relates to a process for producing sushi, comprising rolling sushi body in an edible kombu (kelp), of which the whole surface is covered in adhesion with a shape-keeping film, freezing the sushi prior to its seal-packaging, and freeze storing it, if necessary, and a process for producing sushi comprising thawing the frozen sushi, as well as a process or system for circulation of sushi at ordinary temperature in which a frozen sushi produced by the processes described above, a sushi which can be delivered at ordinary temperature, and a sushi produced by thawing the frozen sushi are circulated at ordinary temperature.

### Background Art

Hitherto, sushi commercially available at stores includes nigiri-sushi that sushi materials such as raw or cooked fishes are placed on vinegared rice, which has been hold and tightened in hand, oslu-zushi (pressed-sushi) that sushi materials such as seafoods are placed on vinegared rice and pressed into shapes, and rolled sushi. As the sushi produced by pressure molding, there are commercially available sushi products such as saba-zushi (mackerel-sushi) that sushi materials including fishes treated with salt and vinegar are placed on vinegared rice. In addition, there is also known a sushi product in which the sushi body was rolled in kelp and further wrapped with a sheet of bamboo sheath.

Pressure molded sushi was generally the one that sushi material such as seasoned and cooked fish was placed on sushi rice and pressed into shape with a sheet of towel or cloth, or vinegared rice and sushi material are placed in a frame and molded by pressing, or the one that the molded sushi product was directly packaged with a sheet of bamboo sheath. In addition, there was a product in which kelp was wound around the molded sushi before seasoning, but it was of type that only the sushi body is eaten after removing the hard kelp.

All of the sushi products described above are produced for sale within a short time (almost one day) and thus inappropriate for storage and sale over a long time (about three days) at ordinary temperature or room temperature in view of the growth of various germs. Furthermore, the pressed sushi, especially of rod type such as saba-sushi tends to be crumbled during its production process, particularly in the kelp winding step, or the bamboo sheath packaging step, and thus the operation should be carried out carefully.

As for the oshi-zushi, Japanese Patent Laid-Open Publication No. 2002-209537 discloses rice balls and oshi-zushi in which the surface of rice is covered with a tasteless food sheet material such as *konjak*. Registered Utility Model No. 3049994 discloses a sea eel rod sushi in which a seasoned sea eel is placed on a rod shaped sushi rice having various seasoned ingredients blended therein and tightened with a cloth or the like.

In these publications is described the production of oshi-zushi, but not the use of kelp or edible kelp and the freezing and thawing of oshi-zushi such as mackerel-sushi.

### Disclosure of the Invention

To the best of our knowledge, there has hitherto been reported nothing about sushi having been rolled in edible kelp, particularly oshi-zushi, which has been frozen or frozen and thawed, or the one which can be provided for circulation for a long period at ordinary temperature, including its production process.

The object of the present invention is to improve the efficiency of the production process of sushi and the quality of the sushi product thus produced by maintaining stably the shape of sushi during its production process, and to provide the technique of producing sushi, of which the kelp outside can be eaten together with the sushi body, with which the tightened unitary mastication feeling of the trinity of kelp, sushi material and vinegared rice can be given, which can be circulated at ordinary temperature for a long period (for example, three days).

The present inventor has conducted intense researches in order to accomplish the object described above, and as a result, found that the above described problems can be solved by cooking a kelp to be wound on the sushi body so soft that it is edible, winding it on the sushi body, rolling and tightening the exterior of the kelp rolled sushi in a wrapping film for foods to fix and cover-package the product in order to maintain the shape of sushi. Thus, the present invention has been accomplished on the basis of this finding.

The present invention is described in Claims 1-13, and the gist of it is as follows.

That is to say, the present invention relates to a process for producing sushi, comprising
winding a cooked edible kelp around a sushi body that a seasoning treated sushi material and vinegared rice have been combined together to form an edible kelp rolled sushi,
covering the whole surface of said edible kelp rolled sushi in adhesion with a shape-keeping film,
freezing said edible kelp rolled sushi covered with the shape-keeping film, in addition,
seal-packaging said shape-keeping film covered and frozen sushi, which has been rolled in the kelp, and then, if necessary,
freeze storing said seal-packaged edible kelp rolled sushi.

The present invention also relates to a process for producing the above-described sushi, wherein the frozen edible kelp rolled sushi is thawed.

The present invention further relates to the frozen sushi produced by the above-described process, a thawed sushi adapted to the circulation for a long period at ordinary temperature, and in addition a circulation process or system of sushi at ordinary temperature.

### Brief Description of Drawings

Figure 1 is a flow-chart scheme which shows the steps for producing sushi prepared in Examples of the present invention.
Figure 2 is a general view of the sushi produced in Examples of the present invention including a partly broken view.
Figure 3 is a sectional view of a piece of sliced sushi produced in Examples of the present invention.

The signs in the figures represent the following meanings:
1. vinegared rice; 2. sushi material (cooked fish); 3. edible kelp (kombu); 4. shape-keeping film; 5. simple packaging sheet; 6. oxygen removing agent; 7. seal-package (pillow package); a. cutting line of the shape-keeping film which is cut into pieces together with the kelp rolled sushi.

### Best Mode for Carrying Out the Invention

The process for producing sushi according to the invention is a process comprising rolling a sushi body that a seasoning treated sushi material and vinegared rice have been combined together in a cooked edible kelp to form an edible kelp rolled sushi, covering the whole surface of said edible kelp rolled sushi in adhesion with a shape-keeping film, freezing said edible kelp rolled sushi covered with the shape-keeping film, seal-packaging the frozen sushi covered with the shape-keeping film, and, if necessary, freeze storing the seal-packaged sushi, and a process comprising thawing the frozen sushi described above. The sushi produced according to the present process comprises the sushi basically consisting of the vinegared rice, sushi material and a sheet of kelp, the shape-keeping film, and the seal-package.

In a preferred embodiment of the present process, the edible kelp rolled sushi covered with the shape-keeping film is wrapped in a simple package prior to seal-packaging, and if necessary, an oxygen removing agent is further included within the seal-packaging. Thus, the sushi produced in the preferred embodiment of the present process comprises the sushi basically consisting of the vinegared rice, sushi material and a kelp, the shape-keeping film, a simple packaging sheet, the seal-package, and preferably an oxygen removing agent.

Furthermore, the present invention also relates to a sushi set which comprises the sushi produced by the process described above and a plastic knife for cutting the edible kelp rolled sushi packaged with a shape-keeping film into plural pieces (morsels) of sushi in combination.

The sushi as the object of the present invention may be the one of the form that the sushi body is rolled in the edible kelp, for which an oshi-zushi (pressed-sushi) or rod sushi such as saba-zushi (mackerel-sushi) is particularly adapted.

The sushi material, which is appropriately seasoning treated, includes fishes, crustacea, and mollusks. As the fishes, there are mentioned mackerel, trout and tai (sea bream) as the typical examples as well as eel, sea eel, and the like. As the crustacea, there are mentioned crab, lobster, and the like. As the mollusks, there are mentioned octopus, calamary, and the like. In the present invention, the fishes are more preferred among them. These sushi materials may be the ones in the form of fry, tempura (Japanese fry) or the like appropriately seasoned depending on tastes.

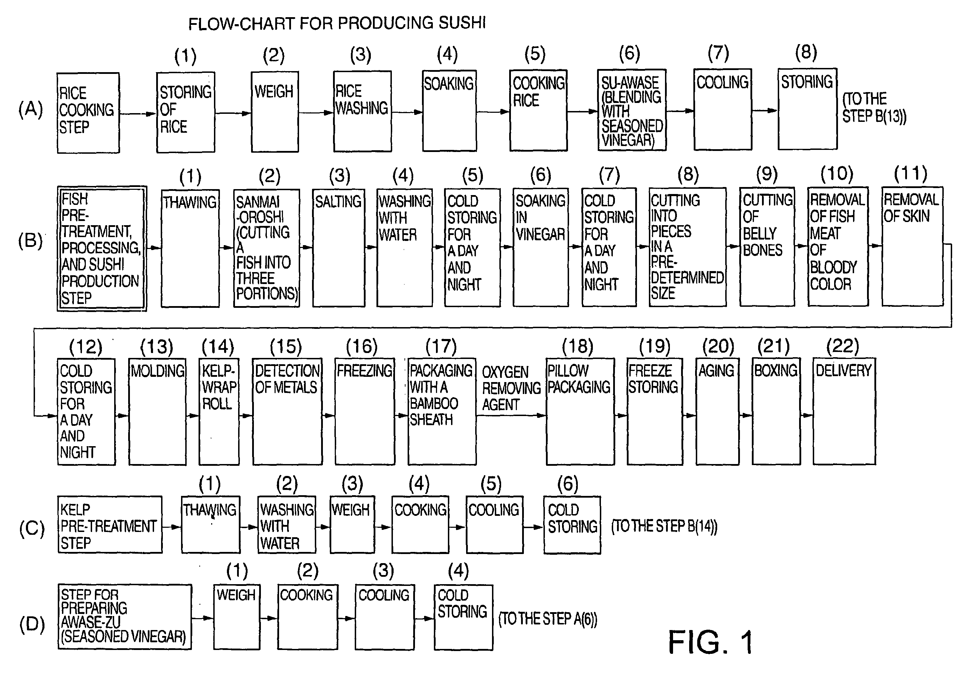

The sushi material can be usually seasoned with salt, vinegar, sugar, soy sauce, mirin (sweet *sake*) and flavorings such as amino acids, alone or in combination. Specifically, in the case of mackerel, there is exemplified a seasoning method by salting prior to dipping in vinegar (for example, within 2 hours), and in the case of trout or sea bream, there is exemplified a seasoning method by salting prior to dipping in a flavoring liquid including the above-described flavoring materials (for example, for about several hours) and vinegar (see the flow chart for producing sushi in Figure 1). In addition, the sushi material can be seasoned and cooked under non-heating or heating conditions to a desired softness or hardness in view of tastes or the like.

Although the size and shape of the sushi material is not limited particularly, it is preferred to have an approximate shape of longitudinal plate as the sushi body combined with the vinegared rice so that the sushi body can be divided into plural pieces.

The sushi rice is the blend of cooked rice with an awase-zu (seasoned vinegar) which contains vinegar and flavorings, and a preferred example of awase-zu includes the one which contains vinegar, sugar, salt, flavorings (amino acid, etc.). The size and shape of the vinegared rice may be set so as to be adapted to the above-described sushi material and molded together with the sushi material using a molding machine described hereinafter or the like.

The kelp is the one which is cooked so as to be edible and preferably is appropriately seasoned and cooked. Without limitation of types of kelp, Hidaka-kelp is particularly preferred from the standpoints of its easy cooking for edibleness and its large width or the like. Kelp hitherto employed for sushi was the one produced in Matsumae type kelp, of which was wiped with a blend of vinegar and water for causing stickiness, and was so hard for eating that it was used only for winding around sushi for flavoring. Thus, the kelp had to be peeled off on eating sushi. In the present invention, the kelp as the raw material is cooked with boiling, for example, using a flavoring liquid including vinegar and flavorings (amino acid, and the like) (see Figure 1) to give an edible kelp having the desired softness or hardness which can be eaten together with the vinegared rice. The edible kelp has preferably a size sufficient to wind around the whole sushi body usually in a single wind, but it may be wound around the sushi body in two or more windings depending tastes or the like.

As the shape-keeping film, packaging materials and the like commercially available and used generally as wrapping films for foods can be usually used, and include, for example, plastic films such as polyvinylidene chloride, polyethylene, and the like. The shape-keeping film may be made in the rectangular shape larger than the total exterior surface of the sushi body around which the edible kelp has been wound, and has a size sufficient to be wound single or more turns (usually about three turns) in the circumferential direction of the sushi.

In the present invention, by rolling and tightening the kelp rolled sushi in the shape-keeping film for covering, the shape of the edible kelp rolled sushi is stably maintained, resulting in being easy and efficient for subsequent works, the unified tight mastication feeling can be given by the trinity of kelp, sushi materials and vinegared rice. In addition, the contamination of foreign materials and various germs is prevented, and thus the growth of microbes is inhibited or suppressed.

As the packaging materials for seal-packaging, packaging materials used for seal-packaging can be usually used, and include, for example, plastic films of polypropylene, polyethylene, etc., and laminated papers of paper and plastic films, among which an oriented polypropylene film is particularly preferred.

The seal-packaging can be formed in a variety of shapes by the methods described below with packaging materials which adapt to the packaging of a size and form sufficient to receive mainly the sushi body.

The simple packaging used in the preferred embodiments of the present invention primarily aims at decorative, anti-microbial, aromatic and other properties, and its shape or the like is not particularly limited and includes the natural or synthetic sheets such as bamboo sheath having a size and shape sufficient to wrap the kelp rolled sushi which is covered with a shape-keeping film, or plastic films in the shape of semi-open bag, among which natural bamboo sheath is commercially available and particularly preferred from the point of the above-described object.

Furthermore, the oxygen removing agent which is also used in the preferred embodiment of the present invention is an oxygen absorbing agent which is used for absorbing and removing oxygen within a seal-package to suppress the oxidation of foods, and, for example, the commercially available packaged agents including the one comprising primarily iron powder such as AGELESS (Mitsubishi Gas Chemical Co., Ltd.) and the like can be used.

The above described oxygen removing agent is also used for the purpose of suppressing the growth of microorganisms, and thus has a synergistic effect on the suppression of the growth of microorganisms by covering with the shape-keeping film described above.

The sushi of the present invention can be produced with use of the above described materials. The process for producing sushi according to the present invention as described above is now described below more particularly on the basis of preferred examples.

The sushi body can be formed generally by pouring a predetermined amount of vinegared rice into a mold frame having an upper surface of approximately rectangular shape, placing the above described seasoned sushi materials on the vinegared rice, and pressing them to be combined together. This molding step may be conducted automatically or semi-automatically with a commercially available conventional sushi molding machine. It goes without saying that the molding step of the sushi body may be also conducted manually with a mold frame, a press plate and the like or by hand-rolling with a sheet of cloth or the like.

Next, the sushi body is rolled in the cooked edible kelp, of which the whole surface is fixed and covered in adhesion by drawing and tightening in the shape-keeping film to maintain the shape stably. This step results particularly in the increase of the density of the sushi rice and thus of a feeling on its hardness or elasticity, and the trinity of the kelp, the sushi material and the sushi rice is integrally led to the tightened state. This step may be conducted by rolling the sushi body in the kelp prior to covering with the film, but the rolling of the sushi body in the pile of the kelp and the film will be more efficient in operations as described below.

It is desirable to adjust the rolling and tightening strength of the shape-keeping film preferably to such an extent that when eating sushi, the sushi rice has a hard or elastic unitary feeling with the kelp and the sushi material. The feeling of hardness or elasticity of the vinegared rice can be adjusted by winding and tightening the shape-keeping film at such strength that the trinity of kelp, sushi material and vinegared rice will give an unitary tight mastication feeling or a harmonic blending feeling in mouth. Although the rolled and tightened strength can be empirically determined by an organoleptic test (mastication feeling), the above described object is practically almost accomplished by conducting basically the operation in a sense of power that the shape keeping film, on which the sushi has been placed, is drawn and rolled to the surface of sushi to wring and harden it even if the load power varies in some extent.

While it is practical to adjust the rolled strength of the shape-keeping film by the empirical determination of the strength on the basis of organoleptic tests including mastication feeling as described above, it is also possible to determine the strength at a desired level by a mechanical measurement. In the method of the mechanical measurement, for example, it is also possible as described in the Examples later to find breaking strength from compression distance and breaking stress with a food rheometer and to use it as a scale of the adjustment.

The breaking strength may be determined for example in the range of 230-270 (g/cm²) for the sushi rice portion.

The kelp rolled sushi having been rolled and tightened in a shape-keeping film for covering is frozen prior to seal-packaging.

In the freezing step, the condition is not limited as long as the kelp rolled sushi is frozen. It is possible to conduct freezing with a conventional freezer, freezing by blowing liquefied carbon dioxide or freezing with multi (usually binary) refrigeration medium compression freezer by air blasting (-45°C to -75°C), or the like, among which rapid freezing is preferred. Freezing is generally continued until the central temperature of the sushi reaches the range of -15 to -30°C, preferably - 20°C or lower.

While it goes without saying that sushi should be produced in a circumstance as clean as possible, it is more preferred to carry out the steps up to covering with the shape-keeping film or freezing in a time as short as possible, for example, within two hours in view of the quality of sushi or the like.

The seal-paclcaging after freezing can be conducted with the packaging materials as described above by the conventional methods such as adhesion by heat-fusing, high-frequency bonding, or adhesion by adhesives depending on the properties of the materials. As the particular examples of the seal-packaging, it is possible to employ bag-like packages such as pillow package, three-way seal package, four-way seal package, or package with a produced bag, or box-like packages, among which the pillow package is preferred in view of primarily operation, sealing and other properties. While one sushi is generally seal-packaged in one seal-package, if necessary, a plurality of sushi may be set and packaged in one package.

While the seal-packaged frozen sushi, if necessary, may be directly subjected to the thawing step described later for circulation, it is generally freeze stored for a certain period of time until delivery then subjected to the thawing step. Thus, after the fixed freezing temperature condition as described above is realized in the freezing step, the sushi is generally stored for a necessary period until it is subjected to the thawing step. It is possible to conduct the storing generally at a temperature of - 25°C or lower, preferably in the range of -25°C to -35°C with a food freezer.

A more preferred embodiment of the process of the present invention is a process for producing sushi, comprising
placing an edible kelp having a size of being wound on the circumferential surface of the sushi (preferably mackerel, trout or sea bream sushi) body on a shape-keeping film having a size larger than the total exterior surface of said edible kelp rolled sushi,
placing a molded sushi body on the edible kelp,
drawing in, contact-bonding and winding said shape-keeping film together with the edible kelp around the circumferential surface of the sushi body, and laminating the both ends of the rolled and tightened peripheral film to cover the periphery of the sushi body and to form a edible kelp rolled sushi,
drawing in the remaining ends of the shape-keeping film at the both sides in the axial direction onto the surface of the edible kelp rolled sushi and contact-bonding the ends to said shape-keeping film on the exterior surface prior to covering and packaging the kelp bound sushi, then
freezing said edible kelp rolled sushi covered with the shape-keeping film, in addition,
wrapping said shape-keeping film covered sushi, which has been bound with edible kelp and frozen, with a sheet of bamboo sheath as a simple packaging material prior to seal-packaging (usually, thereafter fixing the both ends of the bamboo sheath with a string, adhesive tape or the like), in which preferably an oxygen removing agent is additionally included, and then
freezing and storing said seal-packaged edible kelp rolled sushi.

In the above-described process, although the shape-keeping film may be either of single or plural tight windings to the kelp rolled sushi, it is more preferably the one of about three turns of tight windings. Furthermore, the vertical direction of the sushi body placed on the edible kelp on the shape-keeping film is optional, and the sushi body may be placed so that the side surface is in contact with the surface of the kelp. In this step, the shape of the sushi body is firmly maintained by the tight winding of the edible kelp together with the firm tightening and fixing with the shape-keeping film, and thus the sushi can be subjected to the subsequent freezing and packaging steps in a stable condition.

The frozen sushi produced by the present process described above has generally the shape of the edible kelp rolled sushi body for an amount of plural pieces of sushi, and freeze-stored as described above until delivery.

The frozen sushi freeze-stored or, if necessary, the frozen sushi prior to freeze- storing is generally circulated at ordinary temperature for a long period (generally about three days) after thawing on delivery. In the present invention, the term "ordinary temperature" means a temperature in the range of about 15 - 25°C or about 10 - 20°C.

Therefore, the present invention further relates to a process for producing sushi, comprising thawing the frozen sushi produced as described above.

In the present invention, the thawing method which can thaw frozen foods will not be particularly limited, and it is possible to employ any known methods including thawing at low temperature, heat thawing, heat thawing in a temperature control device equipped with a warm-air heating unit, and heat thawing with an electromagnetic wave device such as microwave oven alone or in combination.

In the present invention, the freeze-thaw steps result in the aging of sushi, and larger aging effect will be obtained by thawing such as the one by warm-air heating in which the temperature and time of thawing can be changed appropriately.

By way of a preferable example of the specific method of thawing, the process described in Japanese Patent No. 3180064 can be basically used. This method is the thawing method, in which after sushi has been heated with warm-air in the state that the surface temperature of the sushi does not exceed 25°C (generally at about 14 - 25°C), the sushi is heated at a temperature of about 40°C or more (generally at about 40 - 60°C, more preferably at about 40 - 50°C) at the stage where the central temperature of the sushi passes through the melting temperature of ice crystals (at about -5°C) to raise the temperature and then rapidly to lower the temperature of the warm-air to ensure that the surface of the sushi is maintained at a temperature of 25°C or less (generally at about 15 - 20°C) (also referred to hereinafter as aging-thawing at icing temperature or aging-thawing by warm-air heating). According to the above-described thawing method, a plurality of sushi can be subjected to the uniform thawing treatment, and an advantage of large aging effect by increased taste can be obtained as well, as described in the Examples later. In this connection, no description on the kelp rolled pressed sushi, the aging-thawing or the like is found in the above-described patent.

In order to practice the above-described thawing treatment, any appropriate temperature control device, that is, a temperature control device equipped with a warm-air heater, which can be set at a certain temperature and eliminate the uneven temperatures at different places within the device, can be used. For example, it is possible to use a thawing chamber, which is provided with a fan capable of controlling the chamber to a constant temperature and blowing the warm-air uniformly within the chamber and with plural mobile shelves movable in and out in the form of multi-steps in which a large number of frozen packaged sushi can be arranged. As an example of such thawing chamber, the warm-air thawing chamber described in the above-described patent can be used.

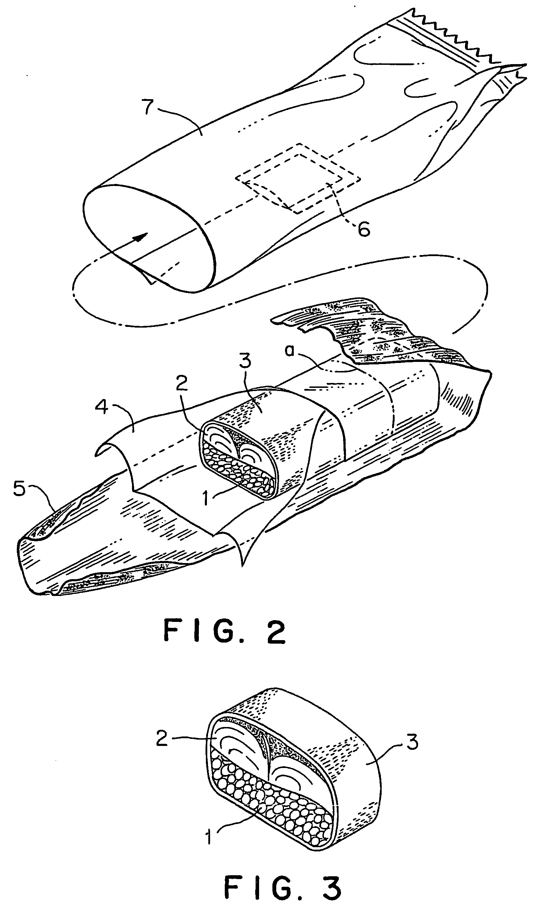

As for the sushi thawed as described above, the kelp rolled sushi packaged with the shape-keeping film within the seal-package can be cut into plural pieces with a plastic knife (see Figures 2 and 3), and can be circulated at ordinary temperature for a long period of time (generally at 15 - 25°C for about three days).

The present invention further relates to a sushi set, comprising in combination of the sushi prepared as described above, and a plastic (polystyrene, polypropylene, or the like) knife which can divide the edible kelp rolled sushi packaged with the shape-keeping film into plural pieces and preferably has a wave-shaped blade. The sushi set, if necessary, may further comprise a napkin, soy sauce, and the like, and generally packaged in a box. Accessories such as the plastic knife, which may be enclosed within a seal-package, are generally packaged in a box separately.

In addition, the present invention further relates to a process or system for circulation of a sushi at ordinary temperature which comprises circulating a thawed sushi produced by the above-described process at ordinary temperature for a certain circulation period of time.

The term " circulation" herein means generally the pathway from a manufacturer through a retail to a consumer, or from a retail to a consumer. Therefore, it goes without saying that since the sushi may have been thawed at the stage delivered to consumers, it is also possible to carry out thawing at the stage of retail, and the sushi, which is generally in the thawed form during the pathway from the manufacturer to retails, may also be in the frozen form, if necessary. In addition, the term "circulation period" means a term from thawing of sushi (at a manufacturer or retail) until its consumption (eating) by a consumer, and it can be referred to as the shelf-life, which is generally for about three days after it has been thawed.

The process for producing sushi according to the present invention has been described above, and for the specific steps in the preferred production process and the examples of sushi produced thereby, there can be referred to the flow chart for producing sushi (comprising fish as a sushi material) in Figure 1, the general view of the packaged sushi and the sectional view of a divided piece of sushi in Figure 2 and 3, respectively.

The process in the flow chart for producing sushi (Figure 1) comprises D: awase-zu (seasoned vinegar) preparation step; A: rice cooking step; C: kelp pre-treatment step; and B: fish material pre-treatment and processing step, and each step generally includes the following steps.

### D. Step for preparing awase-zu (seasoned vinegar)

(1) Weigh (ingredients incorporated: vinegar, sugar, salt, mirin (sweet *sake*), flavorings (amino acid, etc.)); (2) cooking (raw materials in the step (1) are blended under heating); (3) cooling; (4) cold storing (at 10°C or lower). The resultant is applied to the molding in the step A(6).

### A. Rice coolring step

(1) Storing of rice; (2) weigh (a predetermined amount); (3) rice washing; (4) soaking (in water); (5) cooking rice; (6) su-awase (blending of cooked rice with the seasoned vinegar (in the step D(4)); (7) cooling (with rice cooler provided with germ removing filter); (8) storing (at 18 - 20°C). The resultant is applied to the molding in the step B(13).

### C. Kelp pre-treatment step

(1) Thawing (kelp divided in a certain size: thawing with water); (2) washing with water (for removing contminant); (3) weigh; (4) cooking (boiling in vinegar, flavorings (amino acid, etc.)); (5) cooling (together with the flavoring in the step (4)); and (6) cold storing (at 10°C or lower). The resultant is applied to the kelp-wrap roll in the step B(14).

### B. Fish pre-treatment, processing, and sushi production step

(1) Thawing of fish; (2) sanmai-oroshi (cutting a fish into three portions including backbone and both sides of the fish body); (3) salting (in an appropriate amount); (4) washing with water; (4') soaking in seasoning liquid (used in the case of trout and sea bream, but not used in the case of mackerel. Seasoning liquid: salt, sugar, soy sauce, mirin, flavoring (amino acid, etc.)); (5) cold storing (at 3 - 5°C for a day and night in order to penetrate salt or salt and seasonings into fish); (6) soak in vinegar (cereal vinegar); (7) cold storing (at 5°C for a day and night in order to penetrate vinegar into fish); (8) cutting into pieces (in a predetermined size and thickness); (9) cutting of belly bones; (10) removal of fish meat of bloody color; (11) removal of skin; (12) cold storing (at 3 - 5°C for a day and night); (13) molding (with an embossing machine: forming of the sushi body by the steps of weighing sushi rice, pouring into frame mold, placing fish material on the rice, and pressing); (14) kelp-wrap roll (the cooked edible kelp in the step C(6) is placed on a food wrapping film, then the molded sushi body is placed on the kelp, and the whole surface is wound, tightened and covered in adhesion with the wrapping film); (15) detection of metals (identification of foreign materials); (16) freezing (at -50 to - 60°C); (17) packaging with a sheet of bamboo sheath (packaging with a bamboo sheath and binding with a cord); (18) pillow packaging (after the introduction of the packaged sushi and an oxygen removing agent); (19) freeze storing (at -30°C within two weeks to one month); (20) aging-thawing (at the three steps of temperature ranges of 18 - 22°C, 38 - 42°C, and 15 - 20°C for 6 to 9 hours); (21) boxing; (22) delivery (at room temperature).

The present sushi obtained as described above (see Figure 2) can be circulated at ordinary temperature for a long period of time (e.g., three days), and after cutting into pieces (morsels) with a plastic knife at eating, can be directly eaten together with the sushi body without removing the kelp.

Typical embodiments of the production process according to the present invention are specifically described in examples below.

### Example

The present invention is now described below more specifically with reference to Examples and Evaluation Examples, etc., but it is not limited thereto. In addition, the representation % used herein means % by weight, unless otherwise indicated.

### [Example 1] Preparation of saba-zushi (mackerel-sushi)

Mackerel-sushi (pressed sushi in the form of rod) is prepared according to the flow chart for producing sushi in Figure 2.

Sushi rice was prepared according to the steps A and D, and edible kelp (in size of about 18 x 23 cm) was prepared by cooking according to the steps C. The edible kelp was obtained with a commercially available kelp as the material, which was cooked to be edible by boiling in the presence of vinegar and flavoring (amino acid, etc.) to a desired softness. The sushi material of mackerel (in size of about 18 x 6 cm) was prepared according to the steps B (1) - (12).

With a commercially available mold press machine for sushi molding, sushi body was formed according to the steps of weighing sushi rice (ca. 250 g), pouring into mold, placing fish material on the rice, and pressing. The cooked edible kelp was placed on a commercially available wrapping plastic film (shape-keeping film), then the molded sushi body is placed on the kelp (with the sushi rice side downward), and the sushi body was tightened with drawing in and winding the wrapping film around the sushi body side (rolling of three turns) with the residual wrapping film at both sides being wrung inside for contact bonding, covering, and fixing.

The sushi was frozen at -50 to -60°C with a food freezer, packaged in a commercially available sheet-of natural bamboo sheath, put into a pillow package of plastic film together with an oxygen removing agent (AGELESS; Mitsubishi Gas Chemical Co., Ltd.) for seal-packaging. The seal-package was freeze stored (at -30°C within two weeks to one month), and then moved into a thawing chamber (described in Japanese Patent 3180064) for thawing by warm air heating at 18 - 22°C for 1 - 3 hours, 38 - 42°C for 0.5 - 1 hour, and 15 - 20°C for 3 - 6 hours.

### [Example 2] Preparation of trout-sushi

Trout-sushi (pressed sushi in the form of rod) was prepared in the same manner as in Example 1, except that trout was employed in place of mackerel as the fish material and was soaked in the above described seasoning liquid prior to the step 5 (cold storing) in the fish pre-treatment, processing, and production step in the flow chart of Fig.1.

### [Example 3] Preparation of sea bream-sushi

Sea bream-sushi (pressed sushi in the form of rod) was prepared in the same manner as in Example 1, except that sea bream was employed in place of mackerel as the fish material and was soaked in the above described seasoning liquid prior to the step 5 (cold storing) in the fish pre-treatment, processing, and production step (B) in the flow chart of Fig.1.

### [Comparative Example 1] Preparation of the conventional pressed sushi

Kelp (that a sheet of kelp as a raw material was wiped with a blend of vinegar and water for causing stickiness), a sushi material (seasoned mackerel) and sushi rice were placed on a sheet of cloth, and subjected to the conventional pressure molding by hand rolling, or sushi rice and a sushi material were placed on a frame mold for pressure molding, then kelp was wound around the pressure molded sushi to form a kelp rolled sushi, which was then packaged in a sheet of bamboo sheath, thus producing a mackerel-sushi (pressed sushi in the form of rod) having a size similar to that of the sushi prepared in the above examples.

### [Evaluation Example 1]

Organoleptic evaluations such as mastication feeling (by four panelists) and the evaluation test of the easiness of cutting by a plastic knife were carried out on the sushi of the present invention produced in Examples 1 - 3 described above, the comparative products prepared under the partly changed conditions, and the conventional sushi product prepared in Comparative Example.

As a result thereof, the evaluation for the products of the present invention was superior than that for the product of Comparative Example in sensory evaluation teasts on the mastication feeling (mainly harmonization of the kelp and the sushi body) and taste, and the test of the easiness of cutting as shown in Tables 1 and 2.

### <Sensory test>

### Test sample

A: the product of the present invention (wrapping film rolled, bamboo sheath packaged, frozen-thawed product)
B: comparative product (bamboo sheath packaged, frozen-thawed product)
C: comparative product (wrapping film rolled, bamboo sheath packaged, unfrozen product)
D: hand rolled product (uncooked kelp, bamboo sheath packaged, unfrozen product)

### (Edible kelp was used in A - C)

**Table 1**

| | | | | |
|---|---|---|---|---|
| Mastication feeing | A | B | C | D* |
| Panelist a | 5 | 3 | 5 | 3 |
| Panelist b | 5 | 3 | 5 | 2 |
| Panelist c | 5 | 3 | 5 | 3 |
| Panelist d | 5 | 3 | 5 | 2 |
| Sum of evaluation | 20 | 12 | 20 | 8 |
| -Test samples A and C showed good mastication feeling of the edible kelp, and had unitary tightened mastication feeling as a result of the integrally blending of the edible kelp, the sushi material and the sushi rice in mouth. | | | | |
| -In test sample B, the sushi rice is soft, and thus showed no unitary feeling as a whole. | | | | |
| * In test sample D, the kelp was too hard to eat together with the sushi materials, and the sushi rice was soft. | | | | |

| Taste | A | B | C | D |
|---|---|---|---|---|
| Panelist a | 5 | 5 | 3 | 3 |
| Panelist b | 5 | 4 | 3 | 3 |
| Panelist c | 5 | 4 | 3 | 3 |
| Panelist d | 5 | 4 | 3 | 3 |
| Sum of evaluation | 20 | 17 | 12 | 12 |
| -Unfrozen test samples C and D showed the smelling of fish. | | | | |
| -Test sample D was eaten after removing the kelp, but it was weak in taste and not delicious as compared with A and B. | | | | |
| -Frozen test samples A and B had mild and mellow tastes over unfrozen test samples C and D. | | | | |

**Table 2**

| Easiness of cutting (maintaining shape of sushi) | A | B | C | D |
|---|---|---|---|---|
| Panelist a | 5 | 3 | 5 | 3 |
| Panelist b | 5 | 3 | 4 | 3 |
| Panelist c | 5 | 3 | 5 | 3 |
| Panelist d | 5 | 3 | 5 | 3 |
| Sum of evaluation | 20 | 12 | 19 | 12 |
| (Wrapping film rolled products were subjected to test after removing it.) | | | | |
| -Wrapping film rolled test samples A and C were easily cut and were not destroyed in shape. | | | | |
| (The respective items above were evaluated as the average values of the scores by the panelists on the basis of the following five scores: 5 = extremely superior, 4 = superior, 3 = medial, 2 = inferior, 1 = extremely inferior.) | | | | |

### <Physical property measuring test>

### Method: food rheometer

Test sample A: product of the present invention (frame pressure molded, shape-keeping film wrapped, bamboo sheath packaged)
B: comparative product (frame pressure molded, bamboo sheath packaged)
C: conventional product (hand rolled, bamboo sheath packaged)

### Measurement conditions:

Plunger: 10 mm in diameter, cylindrical
Breaking rate: 60 mm/min
Clearance: 2 mm
Sushi: cut into pieces of 2 cm in width for measurement (after peeling the film)
Temperature of the product at measurement: room temperature (ca. 20°C)

The results of physical property measuring test are shown in Table 3.

**Table 3**

| | Compression distance (mm) | Stress at rupture (g) | Breaking strength (g/cm²) |
|---|---|---|---|
| Sushi rice | | | |
| A | 10.0 | 198.0 | 252.2 |
| B | 6.0 | 170.0 | 216.6 |
| C | 4.0 | 100.0 | 127.4 |
| Compression distance: distance of compression until rupture in the measurement under the measurement condition | | | |
| Stress at rupture: weight of compression until rupture in the measurement under the measurement condition | | | |
| Breaking strength: stress at rupture divided by plunger area (weight per unit) | | | |

As apparent from the above described results, the test sample A had a fixed shape, and the sushi rice had a good hardness and easiness for cutting. The test samples B and C were hard to hold the shape and to cut, and the sushi rice were soft.

### [Evaluation Example 2]

Ingredients for good taste (amino acids) and the like were measured in the fish materials of the sushi prepared by the process of the present invention (Example 1) and the conventional product (unfrozen product). The results are shown in Table 4.

**Table 4:**

| Contensts of free amino acids with good taste (%) | | |
|---|---|---|
| | Product of the present invention | Conventional product |
| Aspartic acid | 0.81 | 0.77 |
| Glutamic acid | 4.08 | 3.22 |

In comparison of the relative contents of the good taste ingredients in the product of the present invention with the conventional product (unfrozen product), the product of the invention showed the increases of about 5% in aspartic acid and about 25% in glutamic acid, respectively, which indicates apparently that the good taste has been increased. It is understood that the increase is mainly attributed to the effect of the above described aging-thawing.

In addition, it has also been confirmed that the present product thawed at icing temperature (Example 1), in comparison with the conventional unfrozen product (Comparative Example), has an effect of inhibiting the increase of bitterness ingredients as shown in Table 5.

**Table 5:**

| Relative contents of free amino acids with bitter taste (%) | | |
|---|---|---|
| | Product of the present invention | Conventional Product |
| Valine | 1.20 | 1.59 |
| Methionine | 0.92 | 1.21 |
| Isoleucine | 0.79 | 1.10 |
| Leucine | 2.04 | 2.87 |
| Phenylalanine | 1.35 | 1.71 |

As apparent from the results of Tables 4 and 5, the sushi prepared by the process of the present invention (Example 1), in comparison with the conventional product (unfrozen product), is characterized in that it has a reduced and milde smelling specific to fish such as mackerel in organoleptic properties, and in components it has increased amounts of the free amino acids with good taste and relatively decreased amounts of the bitterness ingredients.

### Industrial Applicability

The present invention can provide the production techniques and circulation systems for sushi particularly useful in the field of oshi-zushi (pressed sushi) such as mackerel-sushi.

As described above, the following advantages are exhibited according to the present invention.

The kelp can be eaten together with the sushi body, and thus it is possible to produce the sushi that the flavor and mastication feeling of the kelp has been exquisitely harmonized with the sushi body.

While sushi has hitherto been packaged directly in a sheet of bamboo sheath or the like, the shape of the edible kelp rolled sushi is stably maintained in the tightened state by rolling and tightening the sushi in adhesion in the shape-keeping film of the present invention and covering therewith, and the operations in the subsequent steps can be efficiently carried out with ease. At the same time, the unified tight mastication feeling can be given by the trinity of kelp, sushi material and vinegared rice.

Since the sushi rolled in the shape-keeping film in adhesion and covered therewith will not directly contact with atmospheric air, the contamination of foreign materials and various germs is prevented, whereby or furthermore by the synergistic effect with the enclosure of an oxygen removing agent the quality of the sushi at ordinary temperature can be maintained stably, and the circulation for a long period of time or in a long distance (for example, for three days) can be realized.

As a conclusion, the present invention particularly improves the operation efficiency and the quality of the sushi product by winding the edible kelp around the sushi body, which is further rolled and tightened in adhesion in a shape-keeping film and covered therewith, and thus maintaining stably the shape of the sushi during its production process to improve the operation efficiency and the quality of the sushi product. At the same time, it can provide the technique for producing sushi, in which the sushi body and the exterior edible kelp can be eaten together in the harmonized synergistic flavor and mastication feeling, the unitary tight mastication feeling can be given by the trinity of kelp, sushi material and sushi rice, and in addition, the circulation can be realized at ordinary temperature for a long period of time.

## Claims

1. A process for producing sushi, comprising
rolling a sushi body that a seasoning treated sushi material and vinegared rice have been combined together in a cooked edible kelp to form an edible kelp rolled sushi,
covering the whole surface of said edible kelp rolled sushi in adhesion with a shape-keeping film,
freezing said edible kelp rolled sushi covered with the shape-keeping film, in addition,
seal-packaging said frozen sushi which has been covered with the shape-keeping film and rolled in the kelp, and then, if necessary,
freeze storing said seal packaged edible kelp rolled sushi.

2. A process for producing sushi according to Claim 1, wherein the edible kelp rolled sushi covered with the shape-keeping film is packaged with a simple packaging material prior to seal-packaging.

3. A process for producing sushi according to Claim 2, comprising
placing an edible kelp having a size of being wound on the circumferential surface of the sushi body on a shape-keeping film having a size larger than the total exterior surface of said edible kelp rolled sushi,
placing a molded sushi body on the edible kelp,
drawing in, contact-bonding and winding said shape-keeping film together with the edible kelp around the circumferential surface of the sushi body, and laminating the both ends of the rolled and tightened peripheral film to cover the periphery of the sushi body and to form a edible kelp rolled sushi,
drawing in the remaining ends of the shape-keeping film at the both sides in the axial direction onto the surface of the edible kelp rolled sushi and contact-bonding the ends to said shape-keeping film on the exterior surface prior to covering and packaging the kelp bound sushi,
freezing said edible kelp rolled sushi covered with the shape-keeping film, in addition,
packaging said frozen and shape-keeping film covered sushi, which has been bound with kelp, with a simple packaging material prior to seal-packaging, and then
freezing and storing said seal-packaged edible kelp rolled sushi.

4. A process for producing sushi according to any one of Claims 1-3, wherein the rolled and tightened strength of the shape-keeping film is adjusted so that when eating sushi, vinegared rice has a unitary feeling of hardness or elasticity together with the kelp and sushi material.

5. A process for producing sushi according to any one of Claims 1-4, wherein an oxygen removing agent is also included within the seal-packaging.

6. A process for producing sushi according to any one of Claims 1-5, wherein the sushi material is fish, the simple package is a sheet of natural or synthetic bamboo sheath, and the seal-packaging is a pillow packaging.

7. A process for producing sushi according to any one of Claims 1-6, wherein the edible kelp rolled sushi has a shape for plural sushi pieces.

8. A process for producing sushi according to any one of Claims 1-7, wherein the frozen edible kelp rolled sushi is thawed.

9. A process for producing sushi according to Claim 8, wherein the edible kelp rolled sushi packaged with the shape-keeping film can be cut into plural sliced pieces of sushi with a plastic knife.

10. A frozen sushi produced by the process according to any one of Claims 1-7.

11. A sushi produced by the process according to Claims 8 or 9, wherein it can be circulated at ordinary temperature.

12. A sushi set, comprising in combination of the sushi according to Claims 10 or 11 and a plastic knife for cutting to divide the edible kelp rolled sushi or the edible kelp rolled sushi packaged with a shape-keeping film into plural pieces of sushi.

13. A process or system for circulating sushi at ordinary temperature, wherein a sushi set comprising in combination of the edible kelp rolled sushi or the edible kelp rolled sushi packaged with a shape-keeping film which have been produced by the process according to Claims 8 or 9, and a plastic knife for dividing into plural pieces of sushi is circulated at ordinary temperature.
